# EUROPÄISCHE PATENTANMELDUNG

(11) **EP 4 023 467 A2**
(43) Veröffentlichungstag der Anmeldung: **06.07.2022**
(21) Anmeldenummer: 21218076.4
(22) Anmeldetag: 29.12.2021
(51) Int. Cl.: B60D 1/145, B62D 13/02, B62D 13/04, B62D 53/08, B62D 53/06

(54) **ZUGGESPANN MIT DREI WECHSELBRÜCKEN**

(30) Priorität: 30.12.2020 DE 102020135134
(71) Anmelder: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(57) **Zusammenfassung**

Die vorliegende Erfindung betrifft ein Zuggespann (5), das zum Transport auf öffentlichen Straßen ausgebildet ist. Das Zuggespann besteht aus einem Zugfahrzeug (10) mit einem Fahrerhaus (15), das in Längsachsenrichtung des Zuggespanns (5) eine maximale Tiefe von 1.300 mm, insbesondere 1.460 mm, weiter insbesondere 1.830 mm oder 2.430 mm oder 3.860 mm aufweist, und mit einer LKW-Ladefläche (20), die sich hinter dem Fahrerhaus (15) befindet und auf dem ein Wechselaufbau (210) lösbar fixiert ist. Eine erste Kupplungskomponente (35) eines Maulkupplungssystems ist im Bereich des Zugfahrzeughecks unterhalb der LKW-Ladefläche (20) angebracht. Die Gesamtlänge des Zugfahrzeugs (10) mit auf der LKW-Ladefläche (20) befindlichem Wechselaufbau (210) beträgt bis zu 11.730 mm, weiter insbesondere 9.930 mm oder 9.330 mm oder 8.590 mm. Ein Sattelanhänger (60) weist eine Anhängerladefläche (65) auf, auf der bis zu zwei Wechselaufbauten (220, 230) lösbar fixiert sind. Die Gesamtlänge der zwei Wechselaufbauten beträgt bis zu 16.500 mm, insbesondere 15.710 mm, weiter insbesondere 14.970 mm oder 14.370 mm oder insbesondere 12.570 mm. Der Sattelanhänger ist mittels einer Untersetzachse (70) lösbar angekoppelt und weist einen zumindest im Fahrbetrieb längenunveränderbaren Zugholm (90) auf. Eine zweite Kupplungskomponente (36) ist an der Vorderseite des Zugholms (90) angeordnet und mit der ersten Kupplungskomponente (35) am Zugfahrzeug (10) lösbar gekoppelt. Bei geradliniger Ausrichtung des Zuggespanns (5) mit auf der LKW-Ladefläche (20) befindlichem Wechselaufbau (210) und auf der Anhängerladefläche befindlichen Wechselaufbauten (220, 230) beträgt die Gesamtlänge des Zuggespanns (5) maximal 25,25 m.

## Beschreibung

### Technisches Gebiet

Die vorliegende Erfindung betrifft ein Zuggespann, das zum Transport auf öffentlichen Straßen ausgebildet ist und dessen Gesamtlänge maximal 25,25 m beträgt. Insbesondere ist ein derartiges Zuggespann zum Transport von drei Wechselaufbauten auf öffentlichen Straßen der Bundesrepublik Deutschland ausgebildet.

### Hintergrund

Angesichts der stetig steigenden Transporte im Kurier-, Express- und Briefdienst (KEB-Bereich) sowie anderer Transportsegmente, die schwerpunktmäßig auf sogenannte Wechselaufbauten setzen, besteht Bedarf an Verbesserungen bei bestehenden Fahrzeugkombinationen.

Ein Wechselaufbau, auch Wechselbehälter (WB), Wechselbrücke, Wechselpritsche, Wechselaufbaubrücke (WAB), Wechselkoffer oder insbesondere in der Schweiz Wechselladebehälter genannt, ist ein austauschbarer Ladungsträger, der ähnlich wie ein ISO-Container von einem Trägerfahrzeug unterfahren oder gekrant wird und sich ebenso trennen lässt.

Für die Nutzung im kombinierten Verkehr muss der Wechselaufbau mit Einrichtungen ausgerüstet sein, die einen Umschlag auf die Bahn ermöglichen (UIC 592-4). Dies wird zum Beispiel durch Greifkanten ermöglicht, die sich an der Unterseite des Wechselaufbaus befinden. Kräne an den Containerterminals besitzen dafür spezielle Greifarme, mit denen die Wechselaufbauten seitlich umfasst und von unten angehoben werden können. Wie ISO-Container werden die Wechselaufbauten auf den für ihren Transport vorgesehenen Fahrzeuganhängern und Güterwaggons durch Zapfen, sogenannten Twistlocks, verbunden.

Das Verriegelungsgrundmaß einer Wechselbrücke entspricht mit längs 5.820 mm bis 5.830 mm dem eines 20-Fuß-ISO-Containers, so dass Wechselbrücken und ISO-Container ohne Umrüsten auf denselben Tragfahrzeugen transportiert werden können. Vorteile der Wechselaufbauten gegenüber ISO-Containern sind seine palettengerechte Innenbreite sowie die flexibleren Möglichkeiten in den Abmessungen.

Insbesondere kommen in der Bundesrepublik Deutschland und im Güternah- und Fernverkehr auf öffentlichen Straßen sogenannte C-Behälter mit 16 t Gesamtgewicht zum Einsatz (EN 284 aus 1992 und 2006/2007: Längen 7.150 mm, 7.450 mm, 7.650 mm und 7.820 mm). Bei diesen Behältern werden vier Stützbeine an den Seiten heruntergeklappt, ein Verriegelungsmechanismus gelöst, und dann kann das Fahrzeug - durch Entlüften der Bälge der Luftfederung - abgesenkt und unter dem abgestellten Aufbau herausgefahren werden. Diese Form wird häufig als Wechselbrücke bezeichnet. C-Behälter sind in der Regel nicht stapelbar. Eventuell vorhandene zwei bis drei Paare von Einweisrollen helfen beim Einfädeln des Trägerfahrzeugs. Abstellbeine werden für unterschiedliche Abstellhöhen angeboten und können, eventuell in mehreren 50 mm Schritten teleskopierbar sein. Eine weitere Variante der C-Behälter sind die stapelbaren Wechselbehälter. Diese sind seitens der europäischen Normung in der Vorbereitung, es gibt sie in den Längen 7450 mm und 7820 mm.

Weitere Wechselbehälter sind die A-Behälter. Diese sind geeignet für den Transport auf Sattelfahrgestellen, besitzen keine Stützbeine und haben ein Gesamtgewicht bis 34 t und eine Länge bis 13.670 mm.

Bisher werden Wechselbehälter auf der Straße mit Sattelaufliegern transportiert.

Die Fliegl Fahrzeugbau GmbH hat auf der Transportlogistik ein neues Lang-Lkw-Konzept für den Transport von bis zu drei 7,45 m langen BDF-Wechselbrücken präsentiert. Erstmals wird hierzu ein Zugfahrzeug mit einem Sattelanhänger über ein Untersetzfahrwerk kombiniert. Auf der Ladefläche des Lkw-Zugfahrzeugs ist eine BDF-Wechselbrücke transportierbar, auf dem angehängten Sattelanhänger zwei BDF-Wechselbrücken. Durch dieses Lang-Lkw-Konzept kann zwar die Verkehrsbelastung reduziert werden und insbesondere auch die CO²-Emissionen dramatisch verringert werden, doch bedarf es zur Einhaltung der Straßenverkehrszulassungsvorschriften eines im Fahrbetrieb längenveränderbaren Zugholms, mittels dem das Untersetzfahrwerk mit dem Zugfahrzeug gekoppelt ist.

Nur aufgrund es längenveränderbaren Zugholms ist ein Transport von drei Wechselbrücken unterschiedlicher Größe unter Einhaltung des sogenannten BO-Kraftkreises und der zulässigen Maximallänge des Zuggespanns möglich. Ein solcher im vorliegenden Fall hydraulisch oder elektromotorisch in der Länge veränderbarer Zugholm ist allerdings teuer, wartungsintensiv und technisch aufwändig.

Einzig der Transport von drei jeweils 7,15 m langen Wechselbehältern ist ohne längenveränderbarem Zugholm unter Einhaltung der in Deutschland zulässigen maximalen Gesamtgespannlänge möglich.

Der vorliegenden Erfindung liegt das technische Problem zugrunde, eine verbesserte, insbesondere einfachere und damit wirtschaftlichere Ausgestaltung eines Lang-Lkw-Konzepts bereitzustellen.

### Zusammenfassung der Offenbarung

Dies technische Problem wird gemäß einem ersten Aspekt durch ein Zuggespann gelöst, das zum Transport auf öffentlichen Straßen ausgebildet ist und dessen Gesamtlänge maximal 25,25 m beträgt. Das Zuggespann gemäß der vorliegenden Erfindung besteht aus einem Zugfahrzeug, einem Sattelanhänger und einer Untersetzachse. Das Zugfahrzeug umfasst gemäß einem ersten Ausführungsbeispiel ein Fahrerhaus, das in Längsachsenrichtung des Zuggespanns eine maximale Tiefe von 1.300 mm, insbesondere 1.460 mm, weiter insbesondere 1.830 mm oder 2.430 mm oder 3.860 mm aufweist, und eine LKW-Ladefläche, die sich hinter dem Fahrerhaus befindet und auf dem ein Wechselaufbau lösbar fixiert ist. Eine erste Kupplungskomponente eines Maulkupplungssystems ist im Bereich des Zugfahrzeughecks, vorzugsweise unterhalb der LKW-Ladefläche, angebracht. Die Gesamtlänge des Zugfahrzeugs mit auf der LKW-Ladefläche befindlichem Wechselaufbau beträgt bis zu 11.730 mm, weiter insbesondere 9.930 mm oder 9.330 mm oder 8.590 mm. Der Sattelanhänger weist eine Anhängerladefläche auf, auf der bis zu zwei Wechselaufbauten lösbar fixiert sind. Die Gesamtlänge der zwei Wechselaufbauten beträgt bis zu 16.500 mm, insbesondere 15.710 mm, weiter insbesondere 14.970 mm oder 14.370 mm oder insbesondere 12.570 mm. Eine Untersetzachse, auf der der Sattelanhänger lösbar angekoppelt ist, hat einen zumindest im Fahrbetrieb längenunveränderbaren Zugholm und eine zweite Kupplungskomponente, die an der Vorderseite des Zugholms angeordnet ist und mit der ersten Kupplungskomponente am Zugfahrzeug lösbar gekoppelt ist. Bei geradliniger Ausrichtung des Zuggespanns mit auf der LKW-Ladefläche befindlichem Wechselaufbau und auf der Anhängerladefläche befindlichen Wechselaufbauten beträgt die Gesamtlänge des Zuggespanns maximal 25,25 m. Trotz dieser überraschend einfachen Ausgestaltung eines Zuggespanns mit maximaler Zuladung ist das Durchfahren des BO-Kraftkreises möglich.

Vorzugsweise beträgt die Gesamtzugfahrzeuglänge von der Zugfahrzeugvorderseite bis zu der Zugfahrzeugrückseite zwischen 7.500 mm und 9.500 mm.

Bei einer beispielhaften Ausführungsform der Erfindung weist der Sattelanhänger eine Anhängerladefläche auf, die zur Aufnahme von bis zu zwei Wechselaufbauten mit jeweils einer Außenlänge von 6.250 mm, 7.150 mm, 7.450 mm, 7.820 mm ausgebildet ist.

Der Sattelanhänger hat vorzugsweise eine Gesamtsattelanhängerlänge von ungefähr 12.550 mm, also zwei Wechselbrücken mit jeweils 6.250 mm Länge zzgl. 50 mm Freiraum zwischen den Wechselbrücken, bis zu 15.715 mm, also zwei Wechselbrücken mit jeweils 7.820 mm zzgl. 75 mm Freiraum zwischen den beiden Wechselbrücken.

Bei geradliniger Ausrichtung des Zuggespanns mit auf der Lkw-Ladefläche befindlichem Wechselaufbau und auf der Anhängerladefläche befindlichen vorderen Wechselaufbau ist vorzugsweise ein Abstand von ca. 400 mm bis zu 1.500 mm, vorzugsweise 1.100 mm vorhanden.

Der Erfindung liegt die Erkenntnis zugrunde, dass der sogenannte BO-Kraftkreis, der von einem solchen Lkw-Zuggespann weiterhin zumindest in der Bunderepublik Deutschland einzuhalten ist, kollisionsfrei durchfahren werden kann, wenn eine längenunveränderbare und damit technisch sehr einfache Zugholmausgestaltung gewählt ist und das Zugfahrzeug dahingehend längenoptimiert ist, das zum Aufbringen eines Wechselaufbaus auf der Lkw-Ladefläche das Fahrerhaus keine Schlafkabine aufweist, also es sich um ein "kurzes" Fahrerhaus handelt. Dadurch ist der zum Durchfahren des BO-Kraftkreises notwendige Zwischenraum zwischen dem Wechselaufbau auf dem Zugfahrzeug und dem vorderen Wechselaufbau auf dem Sattelanhänger von minimal 400 mm bis ca. 1.500 mm, vorzugsweise 1.100 mm gewährleistet und gleichzeitig ist die durch die Straßenverkehrszulassungsvorschriften vorgegebene Gesamtzuggespannlänge von maximal 25,25 m einhaltbar. Eine solche Zuggespannausgestaltung ist als "Unterkuppel"-Version sowie als reguläre "Kupplungs"-Version umsetzbar.

Erfindungsgemäß ist es erstmals möglich, ohne großen technischen Aufwand und unter Rückgriff auf übliche Untersetzfahrwerke, wie sie zum jetzigen Zeitpunkt auf dem Markt sind, und einfachster Zugholmausgestaltung sehr umweltschonende und kostengünstige Lang-Lkw-Zuggespanne insbesondere in der Bundesrepublik Deutschland, aber auch anderen Ländern mit ähnlichen Vorschriften, zu betreiben.

Gemäß einem weiteren Aspekt der vorliegenden Erfindung umfasst ein erfindungsgemäßes Zuggespann, das zum Transport auf öffentlichen Straßen ausgebildet ist, ein Zugfahrzeug mit einem Fahrerhaus, das in Längsachsenrichtung des Zuggespanns eine maximale Tiefe von 1,350 m bis 1,7200 m, insbesondere 1,700 m aufweist, und einer LKW-Ladefläche, die sich hinter dem Fahrerhaus befindet und auf dem ein Wechselaufbau lösbar fixiert ist. Der Wechselaufbau hat eine Gesamtlänge von maximal 7,450 m. Zwischen der Rückwand des Fahrerhauses und der Vorderwand des Wechselaufbaus auf der Ladefläche ist ein Freiraum zwischen 5 mm und 100 mm, vorzugsweise zwischen 48 mm und 52 mm, insbesondere 50 mm, groß. Eine erste Kupplungskomponente eines Maulkupplungssystems ist im Bereich des Zugfahrzeughecks, vorzugsweise unterhalb der LKW-Ladefläche, angebracht. Ein Drehschemelanhänger weist eine Anhängerladefläche auf, auf der bis zu zwei Wechselaufbauten mit jeweils einer Gesamtlänge von maximal 7,450 m lösbar fixiert sind. Zwischen den beiden Wechselaufbauten auf der Anhängerladefläche ist ein Freiraum von 45-75 mm, insbesondere 50-70 mm, vorhanden. Der Drehschemelanhänger ist mittels eine zweiten, zur ersten komplementären Kupplungskomponente an dem Zugfahrzeug angekuppelt. Wiederum beträgt die maximale Zuggespannlänge 25,25 m.

Auch bei dieser Zuggespannausgestaltung mit Drehschemelanhänger ist der BO-Kraftkreis trotz der maximalen Zuladung mit drei Wechselbrücken mit jeweils einer Länge von 7,450 m einhaltbar, ohne dass wartungsintensive und teure längenveränderbare Zug- oder Deichselholme notwendig sind.

Bei einer beispielhaften Ausführungsform eines erfindungsgemäßen Zuggespannes sowohl gemäß dem ersten Aspekt als auch dem zweiten Aspekt hat das Fahrerhaus des Zuggespanns zur Maximierung der Lkw-Ladeflächenlänge keine Schlafkabine. Insbesondere beträgt hierbei die Gesamttiefe des Fahrerhauses 1,350 m bis 1,700 mm.

Bei einer beispielhaften Ausgestaltung eines erfindungsgemäßen Zuggespannes ist die durch die erste Kupplungskomponente gebildete vertikale Drehachse für die zweite Kupplungskomponente der Untersetzachse von der Rückseite der auf der Lkw-Ladefläche fixierten Wechselaufbau zwischen 600 mm bis 3.000 mm in Richtung der Vorderseite des Zugfahrzeugs unter die Lkw-Ladefläche versetzt. Dadurch ist es trotz Ankopplung der Untersetzachse über eine längenunveränderbare Holmausgestaltung an das Zugfahrzeug möglich, den zum Durchfahren des sogenannten BO-Kraftkreises notwendigen Zwischenraum zwischen den sich relativ bewegenden Wechselaufbauten auf dem Zugfahrzeug und dem Sattelanhänger kollisionsfrei zu gewährleisten.

Insbesondere beträgt die unveränderbare, feste Länge des Zugholms während des Fahrbetriebs - Unterkuppler-Prinzip - zwischen 1.000 mm bis 4.000 mm.

### Kurze Beschreibung der Zeichnungen

Im Folgenden sind zur weiteren Erläuterung zum besseren technischen Verständnis verschiedene Ausführungsbeispiele von erfindungsgemäßen Zuggespannen unter Bezugnahme auf die beigefügten Zeichnungen näher beschrieben und erläutert. Es zeigt:
Fig. 1 eine schematische Draufsicht auf ein erfindungsgemäßes Zuggespann bei einem Durchfahren eines BO-Kraftkreises,
Fig. 2 eine schematische Seitenansicht auf ein erfindungsgemäßes Zuggespann gemäß einer ersten beispielhaften Ausführungsform,
Fig. 3 eine schematische Seitenansicht auf ein erfindungsgemäßes Zuggespann gemäß einer zweiten beispielhaften Ausführungsform,
Fig. 4 eine schematische Seitenansicht auf ein erfindungsgemäßes Zuggespann gemäß einer dritten beispielhaften Ausführungsform,
Fig. 5 eine schematische Seitenansicht auf ein erfindungsgemäßes Zuggespann gemäß einer vierten beispielhaften Ausführungsform,
Fig. 6 eine schematische Seitenansicht auf ein erfindungsgemäßes Zuggespann gemäß einer fünften beispielhaften Ausführungsform, und
Fig. 7 eine schematische Seitenansicht auf ein erfindungsgemäßes Zuggespann gemäß einer sechsten beispielhaften Ausführungsform.

### Detaillierte Beschreibung

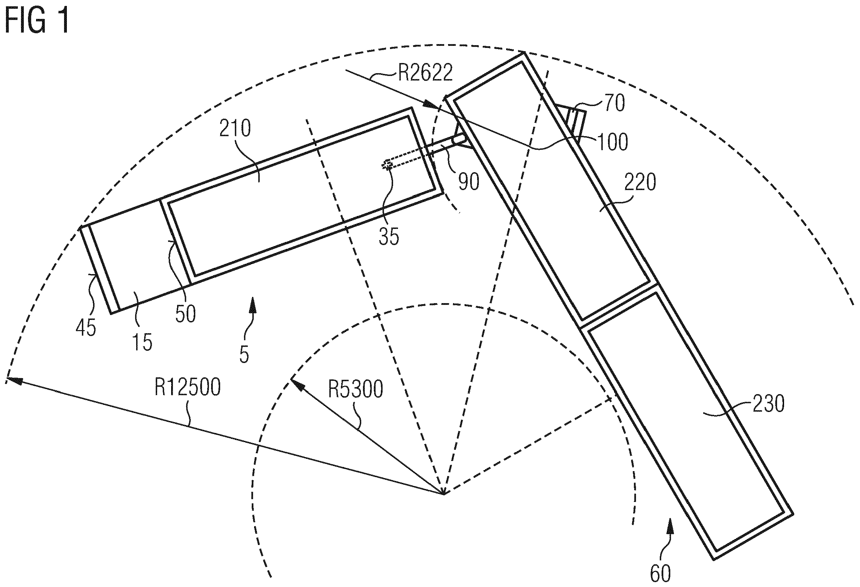

In der Draufsicht gemäß der Fig. 1 umfasst das erfindungsgemäße Zuggespann 5 ein Zugfahrzeug 10 und einen Sattelanhänger 60, der mithilfe einer Untersetzachse 70 an das Zugfahrzeug 10 angehängt ist.

Das Zugfahrzeug 10 hat ein Fahrerhaus 15, das eine geringe Tiefe aufweist, indem es z.B. keine Schlafkabine umfasst. So ist die Fahrerkabine 15 nur derart ausgebildet, dass alle notwendigen Tätigkeiten eines Fahrers in dem Fahrerhaus erbracht werden können, ohne dass dieses hinter dem Fahrersitz einen separaten anderweitig zu nutzenden Raum, wie beispielsweise eine Schlafkoje, aufweist.

Damit ist der Abstand zwischen einer Zugfahrzeugvorderseite 45 und der Vorderseite 50 einer auf der Ladefläche des Zugfahrzeugs aufgebrachten Wechselaufbau 210 minimiert. So beträgt der Abstand ca. 50 mm.

Der Sattelanhänger 60 ist in üblicher Weise ausgebildet und umfasst eine Ladefläche, auf der zwei Wechselaufbauten 220, 230 hintereinander mit einem zwischen den Wechselaufbauten vorhandenen Freiraum von 50 mm bis 75 mm fixiert sind. Deren Gesamtlänge entspricht annährend der maximalen Länge der Ladefläche des Fahrzeuganhängers 60.

Wie hier gezeigt, ist die Untersetzachse 70 mittels eines längenunveränderbaren Zugholms 90 über ein Kupplungsauge (hier nicht gezeigt) an ein Kupplungsmaul 35 am Zugfahrzeug angekoppelt. Das Kupplungsmaul 35 ist hier von der Rückseite des Zugfahrzeugs unter die Ladefläche des Zugfahrzeugs 10 versetzt. Der Zugholm 90 ist als starre Stange ausgebildet. Selbstverständlich kann diese starre Stange 90 auch als starre Zuggabel in üblicher Weise ausgebildet sein. Hierbei kann die starre Zuggabel am Lkw bzw. z.B. an einem Drehschemelanhänger vorhanden sein. Der diesbezügliche Anlenkpunkt kann unterhalb der Ladefläche des Zugfahrzeuges oder an der Untersetzachse angebracht sein. Alternativ kann der Anlenkpunkt auch am Ende des Zugfahrzeugs positioniert sein.

Wie in der Fig. 1 gezeigt, ist es mittels dieser Ausgestaltung möglich, den durch die Radien 12.500 und R5.300 gebildeten BO-Kraftkreis zu durchfahren, trotz dass eine starre Zugholmausgestaltung 90 gewählt ist, was durch die spezielle Anordnung, wie zuvor erläutert, ermöglicht ist.

Es sei hier angemerkt, dass die Wechselaufbauten 210, 220, 230 jeweils eine bevorzugte Länge von 7,45 m haben. Ungeachtet dessen können diese Wechselaufbauten 210, 220, 230 auch Längen von 6.250 mm, 7.150 mm, 7.450 mm, 7.650 mm und 7.820 mm aufweisen. Insbesondere können diese Wechselaufbauten übliche BDF-Wechselbehälter sein.

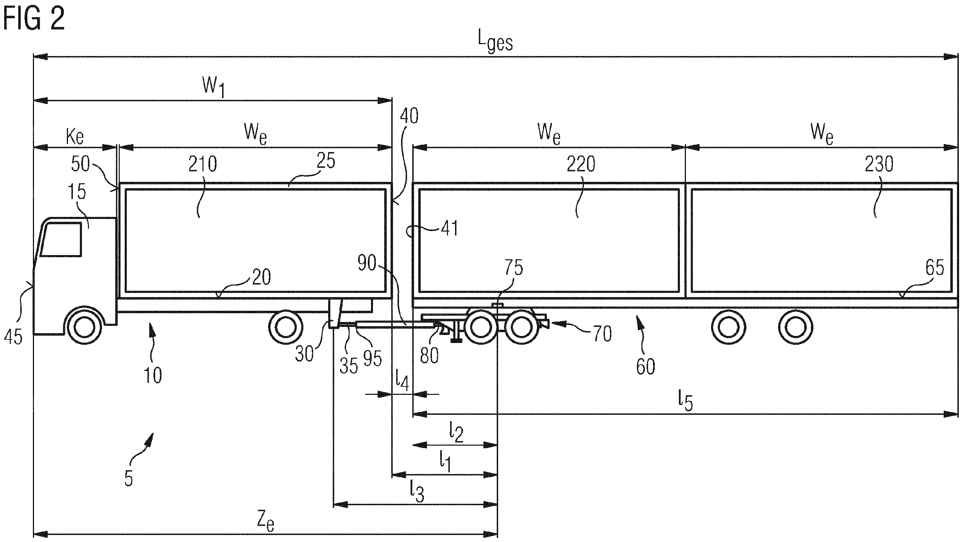

Bei der Seitenansicht gemäß der Fig. 2 ist das erfindungsgemäße Fahrzeuggespann in Fahrtrichtung gesehen geradlinig ausgerichtet. Das Zugfahrzeug 10 hat eine Gesamtlänge von 7.500 mm bis 10.500 mm. Diese Gesamtlänge setzt sich zusammen aus der Tiefe der Fahrerkabine K₁ und der Länge des Wechselaufbaus 210 mit bevorzugt Wₑ = 7,45 m. Die Halterung 30 für die Maulkupplungskomponente 35 am Zugfahrzeug 10 ist um die Länge l_{K} = zwischen 600 mm bis 3.000 mm unter die Ladefläche 20 des Fahrzeuganhängers 60 versetzt. Die Halterung kann aber auch am hinteren Ende oder im Endbereich des Zugfahrzeugs angebracht sein.

Die Gesamtlänge des Zugfahrzeugs 10 ist somit von der Vorderseite 45 am Fahrerhaus 15 bis zur Rückseite 40 des Wechselaufbaus 210 gemessen.

Die Fahrerhaustiefe Kₑ ist von der Vorderseite 45 bis zur Rückwand des Fahrerhauses 51 gemessen.

An der Halterung 30 ist das Kupplungsmaul 35 angebracht, das gemäß üblicher Maulkupplungssysteme ausgebildet ist. Die durch das Kupplungsmaul 35 gebildete vertikale Drehachse bildet hier das Maß für den Versatz unter die Ladefläche (Unterkuppler-Prinzip).

Der Sattelanhänger 60 hat eine Ladefläche 65, auf der zwei hintereinander angeordnete Wechselaufbauten 220, 230 - bevorzugt in der Länge: 7,45 m - fixiert sind. Eine mögliche Gesamtlänge Ls beträgt 2 x 7,45 m zzgl. eines Freiraumes in Höhe von 5 mm bis 100 mm, insbesondere 50 mm bis 75 mm, d.h. 14.975 mm.

Eine Untersetzachse 70 ist mit einer Sattelkupplungsaufnahme 75 ausgebildet, in der ein Königszapfen des Fahrzeuganhängers 60 eingekoppelt ist. Die Untersetzachse 70 ist mittels eines längenunveränderbaren - entweder starren bzw. beweglich gelagerten - Zugholms 90 über ein Kupplungsauge an das Kupplungsmaul 35 eingekoppelt. Die Länge des Zugholms 90 ist derart gewählt, dass der Spalt zwischen der Rückseite 40 des Wechselaufbaus 210 und der Vorderseite der vorderen Wechselaufbau 220 auf dem Fahrzeuganhänger 60 bevorzugt mindestens 400 mm bis 1.500 mm beträgt.

Im vorliegenden Fall ist die Untersetzachse 70 wie in EP 2 634 018 B1 ausgebildet, d.h. der längenunveränderbare Zugholm 90 ist lenkbar an der Untersetzachse 70 angeordnet und im Kupplungsmaul 35 drehbar. Parallel kann die Untersetzachse ebenfalls mit einem längenunveränderbaren Zugholm 90, der starr und nicht drehbar gelagert ist, ausgestaltet sein.

Alternativ ist es neben andere bekannten Untersetzachsenausgestaltungen auch möglich, den längenunveränderbaren Zugholm 90 der Untersetzachse 70 wie in der EP 3 398 842 A1 auszugestalten. In diesem Fall ist der längenunveränderbare Zugholm 90 zwar in das Kupplungsmaul 35 eingekoppelt, jedoch durch eine hier nicht gezeigte Führung in Bezug auf eine vertikale Drehachse starr am Zugfahrzeug 10 angeordnet. Durch eine Drehgelenkausführung ist dieser Zugholm 90 unterhalb der Ladefläche des Anhängers 60 direkt an der Untersetzachse um eine vertikale Achse angeordnet. Der Anlenkpunkt befindet sich an Untersetzachse unterhalb des vorderen Bereiches des Anhängers.

Durch die erfindungsgemäßen Längenausgestaltungen von Zugfahrzeug, Anbringungsort der Kupplungskomponente 35 am Zugfahrzeug und der einfachsten starren bzw. beweglichen längenunveränderbaren Zugholmausgestaltung 90 ist der zum Durchfahren des BO-Kraftkreises notwendige Zwischenraum l₄ zwischen der Rückseite 40 des Wechselaufbaus 210 und der Vorderseite 41 des Wechselaufbaus 220 gewährleistet. Hier beträgt dieser Abstand bevorzugt mindestens 400 mm bis 1.500 mm.

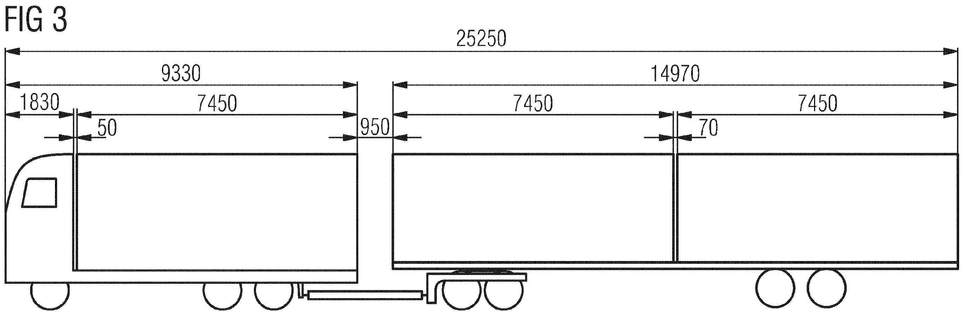

In der Fig. 3 ist eine Seitenansicht auf ein erfindungsgemäßes Zuggespann gemäß einer zweiten beispielhaften Ausführungsform gezeigt. Dieses Zuggespann weist ein Zugfahrzeug mit Führerhaus aus, dessen Tiefe bzw. Länge lediglich 1.830 mm beträgt. Es können somit drei Wechselbehälter mit einer jeweiligen Länge von 7.450 mm transportiert werden, ohne dass der Zugholm längenveränderbar ist. Der Abstand zwischen dem ersten und dem zweiten Wechselbehälter beträgt hierbei 950 mm, was ausreichend ist, dass der BO-Kraftkreis durchfahren werden kann.

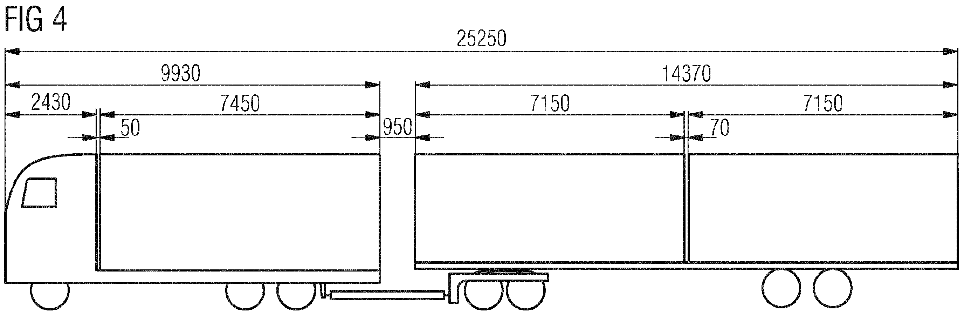

In der Fig. 4 ist eine Seitenansicht auf ein erfindungsgemäßes Zuggespann gemäß einer dritten beispielhaften Ausführungsform gezeigt. Dieses Zuggespann weist ein Zugfahrzeug mit Führerhaus aus, dessen Tiefe bzw. Länge lediglich 2.430 mm beträgt. Es können somit drei Wechselbehälter mit einmal einer Länge von 7.450 mm und zweimal einer Länge von 7.150 mm transportiert werden, ohne dass der Zugholm längenveränderbar ist. Der Abstand zwischen dem ersten und dem zweiten Wechselbehälter beträgt auch hier 950 mm, was ausreichend ist, dass der BO-Kraftkreis durchfahren werden kann.

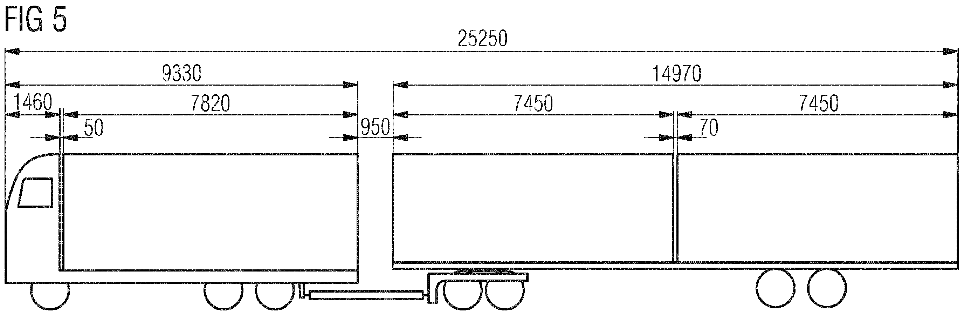

In der Fig. 5 ist eine Seitenansicht auf ein erfindungsgemäßes Zuggespann gemäß einer vierten beispielhaften Ausführungsform gezeigt. Dieses Zuggespann weist ein Zugfahrzeug mit Führerhaus aus, dessen Tiefe bzw. Länge lediglich 1.460 mm beträgt. Es können somit drei Wechselbehälter mit einmal einer Länge von 7.820 mm und zweimal einer Länge von 7.450 mm transportiert werden, ohne dass der Zugholm längenveränderbar ist. Der Abstand zwischen dem ersten und dem zweiten Wechselbehälter beträgt auch hier 950 mm, was ausreichend ist, dass der BO-Kraftkreis durchfahren werden kann.

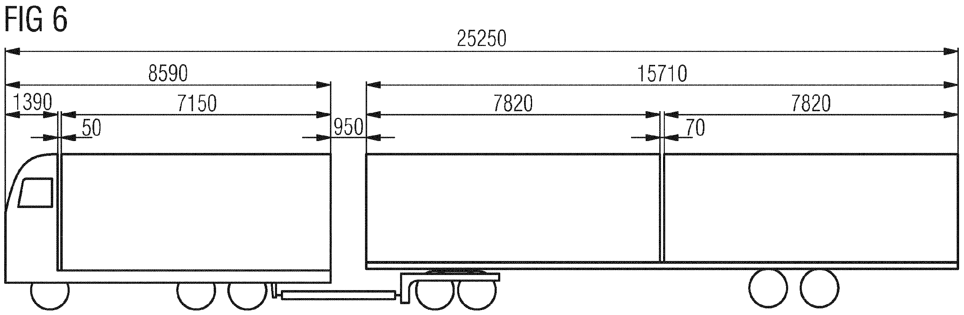

In der Fig. 6 ist eine Seitenansicht auf ein erfindungsgemäßes Zuggespann gemäß einer fünften beispielhaften Ausführungsform gezeigt. Dieses Zuggespann weist ein Zugfahrzeug mit Führerhaus aus, dessen Tiefe bzw. Länge lediglich 1.390 mm beträgt. Es können somit drei Wechselbehälter mit einmal einer Länge von 7.150 mm und zweimal einer Länge von 7.820 mm transportiert werden, ohne dass der Zugholm längenveränderbar ist. Der Abstand zwischen dem ersten und dem zweiten Wechselbehälter beträgt auch hier 950 mm, was ausreichend ist, dass der BO-Kraftkreis durchfahren werden kann.

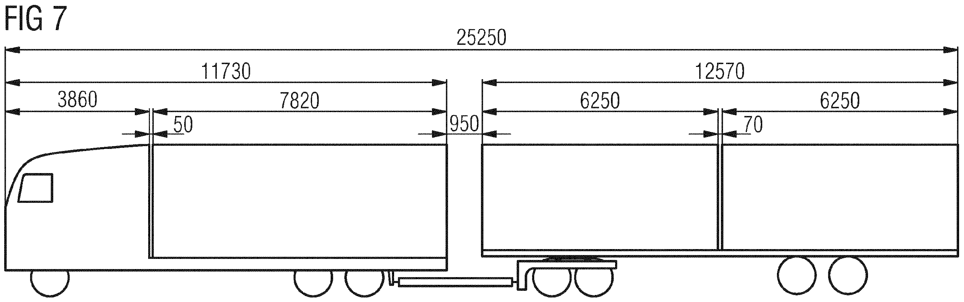

In der Fig. 7 ist eine Seitenansicht auf ein erfindungsgemäßes Zuggespann gemäß einer sechsten beispielhaften Ausführungsform gezeigt. Dieses Zuggespann weist ein Zugfahrzeug mit Führerhaus aus, dessen Tiefe bzw. Länge 3.860 mm beträgt. Es können somit drei Wechselbehälter mit einmal einer Länge von 7.820 mm und zweimal einer Länge von 6.250 mm transportiert werden, ohne dass der Zugholm längenveränderbar ist. Der Abstand zwischen dem ersten und dem zweiten Wechselbehälter beträgt auch hier 950 mm, was ausreichend ist, dass der BO-Kraftkreis durchfahren werden kann.

## Patentansprüche

1. Zuggespann (5), das zum Transport auf öffentlichen Straßen ausgebildet ist, bestehend aus:
- einem Zugfahrzeug (10) mit:
a. einem Fahrerhaus (15), das in Längsachsenrichtung des Zuggespanns (5) eine maximale Tiefe von 1.300 mm, insbesondere 1.460 mm, weiter insbesondere 1.830 mm oder 2.430 mm oder 3.860 mm aufweist, und
b. einer LKW-Ladefläche (20), die sich hinter dem Fahrerhaus (15) befindet und auf dem ein Wechselaufbau (210) lösbar fixiert ist,
c. einer ersten Kupplungskomponente (35) eines Maulkupplungssystems, die im Bereich des Zugfahrzeughecks, vorzugsweise unterhalb der LKW-Ladefläche (20), angebracht ist,
wobei die Gesamtlänge des Zugfahrzeugs (10) mit auf der LKW-Ladefläche (20) befindlichem Wechselaufbau (210) bis zu 11.730 mm, weiter insbesondere 9.930 mm oder 9.330 mm oder 8.590 mm beträgt,
- einen Sattelanhänger (60), der eine Anhängerladefläche (65) aufweist, auf der bis zu zwei Wechselaufbauten (220, 230) lösbar fixiert sind und die Gesamtlänge der Wechselaufbauten bis zu 16.500 mm, insbesondere 15.710 mm, weiter insbesondere 14.970 mm oder 14.370 mm oder insbesondere 12.570 mm beträgt, und
- einer Untersetzachse (70), auf der der Sattelanhänger (60) lösbar angekoppelt ist, mit:
a. einem zumindest im Fahrbetrieb längenunveränderbaren Zugholm (90),
b. einer zweite Kupplungskomponente (36), die an der Vorderseite des Zugholms (90) angeordnet ist und mit der ersten Kupplungskomponente (35) am Zugfahrzeug (10) lösbar gekoppelt ist,
wobei bei geradliniger Ausrichtung des Zuggespanns (5) mit auf der LKW-Ladefläche (20) befindlichem Wechselaufbau (210) und auf der Anhängerladefläche befindlichen Wechselaufbauten (220, 230) die Gesamtlänge des Zuggespanns (5) maximal 25,25 m beträgt.

2. Zuggespann (5) nach Anspruch 1, bei dem der Abstand zwischen der Rückseite des Wechselaufbaus (210) auf der LKW-Ladefläche (20) und der Vorderseite des vorderen Wechselaufbaus (220) auf dem Sattelanhänger (60) mindestens 0,40 m und maximal 1,50 m beträgt.

3. Zuggespann (5) nach Anspruch 1 oder 2, bei dem die Wechselaufbauten (210, 220, 230) jeweils eine Außenlänge von maximal 7,45 m oder 7,82 m haben.

4. Zuggespann (5) nach einem der voranstehenden Ansprüche, bei dem die Gesamtsattelanhängerlänge (l5) maximal 16.500 mm, insbesondere 14.975 mm beträgt.

5. Zuggespann (5) nach einem der voranstehenden Ansprüche, bei dem das Fahrerhaus (15) zur Maximierung der Lkw-Ladeflächenlänge keine Schlafkabine aufweist und insbesondere die Gesamttiefe des Fahrerhauses (10) maximal 2.350 mm, insbesondere 1.300mm, weitere insbesondere 1.700 mm beträgt.

6. Zuggespann (5) einem der voranstehenden Ansprüche, bei dem die durch die erste Kupplungskomponente (35) gebildete vertikale Drehachse für die zweite Kupplungskomponente der Untersetzachse (70) von der Rückseite des auf der Lkw-Ladefläche fixierten Wechselaufbaus (210) zwischen 600 mm bis 3.000 mm in Richtung der Vorderseite des Zugfahrzeugs unter die Lkw-Ladefläche versetzt ist.

7. Zuggespann (5) nach einem der voranstehenden Ansprüche, bei dem die feste, unveränderbare Länge des Zugholms bzw. der Zuggabel zwischen 1.000 mm bis 4.000 mm beträgt.

8. Zuggespann (5) nach einem der voranstehenden Ansprüche, bei dem auf der LKW-Ladefläche (20) ein einziger Wechselaufbau (210) mit einer Außenlänge von maximal 7,45 m lösbar fixiert ist und auf der Anhängerladefläche (65) zwei Wechselaufbauten (220, 230) mit jeweils einer Außenlänge von maximal 7,45 m lösbar fixiert sind.

9. Zuggespann (5) nach einem der voranstehenden Ansprüche, bei der die Gesamtzugfahrzeuglänge (Wl) von der Zugfahrzeugvorderseite (45) bis zur Zugfahrzeugrückseite (40) im Rahmen der Beladung mit einem Wechselaufbau (210) mit einer Länge von 7,45 m maximal 10.500 mm, insbesondere 9.200 mm beträgt.

10. Zuggespann (5) nach einem der Ansprüche 1-8, bei dem:
- die Gesamttiefe des Fahrerhauses maximal 1.400 mm beträgt,
- auf der LKW-Ladefläche (20) ein Wechselaufbau (210) mit einer Außenlänge von maximal 7.820 mm derart lösbar fixiert, dass ein Abstand zur Rückseite des Fahrerhaus mindestens 5 mm - 100 mm, insbesondere 40 mm - 50 mm beträgt,
- der Abstand zwischen dem Wechselaufbau (210) auf dem Zugfahrzeug und dem Wechselaufbau (220) auf dem Sattelanhänger maximal 1.500 mm, insbesondere 1.000 mm beträgt, und
- auf der Anhängerladefläche zwei Wechselaufbauten (220, 230) mit jeweils einer Außenlänge von 6.250 mm bis 7.450 mm und einem Freiraum zwischen den beiden Wechselaufbauten (220, 230) in Bereich von 20 mm bis 100 mm, vorzugsweise 70 mm bis 80 mm, insbesondere 70 mm, lösbar fixiert sind.

11. Zuggespann (5) nach einem der Ansprüche 1-8, bei dem: die Gesamttiefe des Fahrerhauses maximal 1.400 mm beträgt,
- auf der LKW-Ladefläche (20) ein Wechselaufbau (210) mit einer Außenlänge von maximal 7.450 mm derart lösbar fixiert, dass ein Abstand zur Rückseite des Fahrerhaus maximal 5 mm bis 100 mm, insbesondere 40 mm - 50 mm beträgt,
- der Abstand zwischen dem Wechselaufbau (210) auf dem Zugfahrzeug und dem Wechselaufbau (220) auf dem Sattelanhänger maximal 1,00 m beträgt, und
- auf der Anhängerladefläche zwei Wechselaufbauten (220, 230) mit jeweils einer Außenlänge von 7.820 mm und einem Freiraum zwischen den beiden Wechselaufbauten (220, 230) in Bereich von 20 mm bis 100 mm vorzugsweise 70 mm bis 80 mm, insbesondere 75 mm, lösbar fixiert sind.

12. Zuggespann (5) nach einem der Ansprüche 1-8, bei dem:
- die Gesamttiefe des Fahrerhauses maximal 1.830 mm vorzugsweise 1.700 mm beträgt,
- auf der LKW-Ladefläche (20) ein Wechselaufbau (210) mit einer Außenlänge von maximal 7.450 mm derart lösbar fixiert, dass ein Abstand zur Rückseite des Fahrerhaus maximal 5 mm bis 100 mm, insbesondere 40 mm - 50 mm beträgt,
- der Abstand zwischen dem Wechselaufbau (210) auf dem Zugfahrzeug und dem Wechselaufbau (220) auf dem Sattelanhänger maximal 1,00 m beträgt, und
- auf der Anhängerladefläche zwei Wechselaufbauten (220, 230) mit jeweils einer Außenlänge von 7.450 mm und einem Freiraum zwischen den beiden Wechselaufbauten (220, 230) in Bereich von 20 mm bis 100 mm, insbesondere 70 mm bis 80 mm, lösbar fixiert sind.

13. Zuggespann (5), bestehend aus:
- einem Zugfahrzeug (10) mit:
a. einem Fahrerhaus (15), das in Längsachsenrichtung des Zuggespanns (5) eine maximale Tiefe von 1.400 mm bis 1.460 mm aufweist, und
b. einer LKW-Ladefläche (20), die sich hinter dem Fahrerhaus (15) befindet und auf dem ein Wechselaufbau (210) mit einer Außenlänge von 7.820 mm derart lösbar fixiert, dass ein Abstand zur Rückseite des Fahrerhaus maximal 5 mm bis 100 mm, insbesondere 40 mm - 50 mm beträgt,
c. einer ersten Kupplungskomponente (35) eines Maulkupplungssystems, die im Bereich des Zugfahrzeughecks, vorzugsweise unterhalb der LKW-Ladefläche (20), angebracht ist,
- einem Drehschemelanhänger mit Zugdeichsel, die mit der ersten Kupplungskomponente gekuppelt ist, und einer Anhängerladefläche, auf der zwei Wechselaufbauten (220, 230) mit jeweils einer Außenlänge von 7.450 mm und einem Freiraum zwischen den beiden Wechselaufbauten (220, 230) in Bereich von 20 mm bis 100 mm, insbesondere 70 mm, lösbar fixiert sind,
wobei der Abstand zwischen dem Wechselaufbau (210) auf dem Zugfahrzeug und dem vorderen Wechselaufbau (220) auf dem Drehschemelanhänger maximal 1.500 mm beträgt und die Gesamtlänge des Zuggespanns maximal 25,25 m beträgt.

14. Zuggespann (5), bei dem:
- einem Zugfahrzeug (10) mit:
a. einem Fahrerhaus (15), das in Längsachsenrichtung des Zuggespanns (5) eine maximale Tiefe von 1.700 mm bis 1.830 mm aufweist, und
b. einer LKW-Ladefläche (20), die sich hinter dem Fahrerhaus (15) befindet und auf dem ein Wechselaufbau (210) mit einer Außenlänge von 7.450 mm derart lösbar fixiert, dass ein Abstand zur Rückseite des Fahrerhaus maximal 5 mm bis 100 mm, insbesondere 40 mm - 50 mm beträgt,
c. einer ersten Kupplungskomponente (35) eines Maulkupplungssystems, die im Bereich des Zugfahrzeughecks, vorzugsweise unterhalb der LKW-Ladefläche (20), angebracht ist,
- einem Drehschemelanhänger mit Zugdeichsel, die mit der ersten Kupplungskomponente gekuppelt ist, und einer Anhängerladefläche, auf der zwei Wechselaufbauten (220, 230) mit jeweils einer Außenlänge von 7.450 mm und einem Freiraum zwischen den beiden Wechselaufbauten (220, 230) in Bereich von 20 mm bis 100 mm, insbesondere 70 mm, lösbar fixiert sind,
wobei der Abstand zwischen dem Wechselaufbau (210) auf dem Zugfahrzeug und dem vorderen Wechselaufbau (220) auf dem Drehschemelanhänger maximal 1.500 mm beträgt und die Gesamtlänge des Zuggespanns maximal 25,25 m beträgt.
